# EUROPÄISCHE PATENTANMELDUNG

(11) **EP 4 335 609 A1**
(43) Veröffentlichungstag der Anmeldung: **13.03.2024**
(21) Anmeldenummer: 23192578.5
(22) Anmeldetag: 22.08.2023
(51) Int. Cl.: B29C 48/025, B29C 48/355, B65G 37/00, B65G 41/00, B29C 48/25, B29C 48/265, B29C 48/49, B29C 48/21, B29D 30/00

(54) **EXTRUSIONSLINIE UND VERFAHREN ZUR EXTRUSION VON KAUTSCHUK**

(30) Priorität: 08.09.2022 DE 102022209363
(71) Anmelder: Continental Reifen Deutschland GmbH, 30175 Hannover (DE)
(72) Erfinder: Sharifi, Monir, 30165 Hannover (DE)
(74) Vertreter: Continental Corporation

(57) **Zusammenfassung**

Die Erfindung betrifft eine Extrusionslinie (1) zur Extrusion von Kautschuk aufweisend einen Upstream zum Zuführen eines Edukts zu einer

Extruderkonfiguration (2) der Extrusionslinie (1), wobei die Extruderkonfiguration (2) zumindest einen Extruder (9) aufweist, und einen Downstream (7), wobei zwischen dem Downstream (7) und der Extruderkonfiguration (2) eine Abzugsrolle (4) und ein Fördereinheit (5) angeordnet ist.

## Beschreibung

Die Erfindung betrifft eine Extrusionslinie zur Extrusion von Kautschuk aufweisend einen Upstream zum Zuführen eines Edukts zu einer Extruderkonfiguration der Extrusionslinie, wobei die Extruderkonfiguration zumindest einen Extruder aufweist, und einen Downstream, wobei zwischen dem Downstream und der Extruderkonfiguration eine Abzugsrolle und ein Fördereinheit angeordnet ist. Weiterhin betrifft die Erfindung ein Verfahren zur Extrusion von Kautschuk sowie die Verwendung der Extrusionslinie.

Extrusionslinien für Kautschuk weisen eine lange Kühlstrecke zum Kühlen des Extrudates auf. Der Kühler und somit der Downstream sind hierzu entsprechend groß auszulegen und haben einen großen Platzbedarf und sind kostenintensiv. Bei einer Vielzahl von Extruderkonfigurationen zum Herstellen unterschiedlicher Produkte ist eine entsprechende Anzahl von Downstreams notwendig.

Vor diesem Hintergrund liegt der Erfindung die Aufgabe zugrunde, mehrere Extruderkonfigurationen betreiben zu können, wobei die Kosten und der Platzbedarf hierfür verringert wird.

Diese Aufgabe wird gelöst mit einer Vorrichtung gemäß den Merkmalen des Patentanspruches 1 sowie einem Verfahren und einer Verwendung gemäß den nebengeordneten Ansprüchen. Die Unteransprüche betreffen besonders zweckmäßige Weiterbildungen der Erfindung.

Erfindungsgemäß ist also eine Extrusionslinie zur Extrusion von Kautschuk aufweisend einen Upstream zum Zuführen eines Edukts zu einer Extruderkonfiguration der Extrusionslinie vorgesehen, wobei die Extruderkonfiguration zumindest einen Extruder aufweist, und einen Downstream, wobei zwischen dem Downstream und der Extruderkonfiguration eine Abzugsrolle und ein Fördereinheit angeordnet ist. Die Fördereinheit ist derart eingerichtet, dass von der ersten Extruderkonfiguration oder einer zweiten Extruderkonfiguration der Extrusionslinie ein Produkt zum Downstream zuführbar ist.

Soweit der Kautschuk nicht extrudiert wurde, wird er als Edukt bezeichnet und nach der Extrusion als Produkt. Der Downstream umfasst den Kühler sowie bevorzugt eine Einheit zum farblichen Markieren und Vermessen. Die Abzugsrolle und die Fördereinheit sind keine Bestandteile des Downstreams.

Es wird durch die erfindungsgemäße Extrusionslinie vorteilhafterweise erreicht, dass bei einer abwechselnden Nutzung von mehreren Extruderkonfigurationen in einfacher Art genau ein Downstream verwendet werden kann. Durch den Entfall von weiteren Downstreams kann der Kosten- und Platzbedarf für Downstreams verringert werden.

Insbesondere ist die erfindungsgemäße Extrusionslinie bei der Extrusion von Kautschuk vorteilhaft, da eine sehr große Produktvielfalt bei Kautschukprodukten besteht mit der Notwendigkeit von einer Vielzahl von Extruderkonfigurationen, die teilweise nur zu einem geringen Zeitanteil in Betrieb sind.

Eine bevorzugte Ausführungsform sieht vor, dass die Abzugsrolle mit zumindest einem Teilbereich der Fördereinheit oder die Extruderkonfiguration verfahrbar zum Downstream gelagert ist, wobei eine zweite Extruderkonfiguration der Extrusionslinie mit einem zweiten Upstream zur Extrusion auf die Abzugsrolle vorgesehen ist. Eine verfahrbar zum Downstream gelagerte Fördereinheit oder Extruderkonfiguration ermöglicht es in einfacher Form einen Downstream für mehrere Extruderkonfigurationen zu nutzen. Vorteilhaft ist bei dieser Ausführungsform insbesondere, dass nur eine Fördereinheit und eine Abzugsrolle benötigt wird.

Eine weitere bevorzugte Ausführungsform sieht vor, dass die Fördereinheit eine Schrumpfrollenbahn ist. Hierdurch ist es mit der Fördereinheit möglich das Produkt bereits vor dem Kühlen gezielt zu schrumpfen und eine hohe Maßhaltigkeit des Produkts zu erreichen.

Eine weitere bevorzugte Ausführungsform sieht vor, dass die Fördereinheit aus passiven Elementen besteht. Eine passive Fördereinheit ermöglicht einen besonders einfachen Aufbau einer Fördereinheit. Eine Energieversorgung kann entfallen. Dies ist insbesondere bei verfahrbaren Fördereinheiten vorteilhaft.

Eine weitere bevorzugte Ausführungsform sieht vor, dass die Fördereinheit ein Fördermittel und ein zweites Fördermittel aufweist, wobei das Fördermittel dazu eingerichtet ist das Produkt mit der Abzugsrolle von der ersten Extruderkonfiguration und das zweite Fördermittel dazu eingerichtet ist das Produkt mit einer zweiten Abzugsrolle von der zweiten Extruderkonfiguration dem Downstream zuzuführen. Eine Nutzung eines Downstreams für mehrere Extruderkonfiguration wird ermöglicht, ohne dass eine Extruderkonfiguration oder ein Fördermittel verfahrbar ausgestaltet sein muss. Ein besonders effizientes Umrüsten zwischen den Extruderkonfiguration wird ermöglicht. Die Abzugsrolle und die Fördereinheit kann an die Extruderkonfiguration angepasst werden.

Eine weitere bevorzugte Ausführungsform sieht vor, dass die Extruderkonfiguration und die zweite Extruderkonfiguration jeweils zumindest einen Extruder, bevorzugt jedoch mehrere zueinander ausgerichtete Extruder, aufweist. Durch die Verwendung von Extruderkonfigurationen mit mehreren Extrudern sind Produkte herstellbar, die aus mehreren unterschiedlichen Werkstoffen hergestellt sind.

Eine weitere bevorzugte Ausführungsform sieht vor, dass die Extruderkonfiguration und die zweite Extruderkonfiguration unterschiedlich ausgeführt sind, insbesondere hinsichtlich der Anzahl der Extruder, der Größe der Extruder und/oder des Extruderkopfdesigns. Hierdurch wird eine besonders große Bandbreite von Produkten mit einer Extrusionslinie herstellbar.

Eine weitere bevorzugte Ausführungsform sieht vor, dass die Extruderkonfiguration oder die zweite Extruderkonfiguration nicht verfahrbar gelagert ist und geradlinig zum Downstream ausgerichtet ist, wobei die Abzugsrolle mit Fördereinheit verfahrbar zum Downstream gelagert ist. Das geradlinige Ausrichten einer Extruderkonfiguration zum Downstream ermöglicht es ein Produkt zum Downstream zu fördern, ohne dass er einen Radius durchlaufen muss. Hierdurch können besonders biegeempfindliche Produkte dem Downstream beschädigungsfrei zugeführt werden.

Eine weitere bevorzugte Ausführungsform sieht vor, dass die Extruderkonfiguration zu der zweiten Extruderkonfiguration in einer horizontalen Ebene oder in einer vertikalen Ebene ausgerichtet ist. Das Anordnen von Extruderkonfigurationen in einer horizontalen Ebene ermöglicht einen besonders einfachen Aufbau einer Extrusionslinie, da beide Extruderkonfiguration auf der gleichen Ebene angeordnet sind. Eine vertikale Anordnung, also das Anordnen der Extruderköpfe lotrecht übereinander, ermöglicht es beide Produkte dem Downstream zuzuführen, ohne dass diese einen Biegeradius durchlaufen, der nicht senkrecht beziehungsweise orthogonal zur Auflagefläche des Produkts auf dem Fördermittel ausgerichtet ist. In dieser Biegerichtung weisen die Produkte typischerweise ihre höchste Biegbarkeit auf, so dass sie besonders schädigungsarm dem Downstream zugeführt werden können.

Eine weitere bevorzugte Ausführungsform sieht vor, dass die Extruderkonfiguration und die zweite Extruderkonfiguration verfahrbar zum Downstream gelagert sind. Eine Verfahrbarkeit zweier Extruderkonfiguration ermöglicht eine unbewegliche Lagerung der Fördereinheit, wobei die Fördereinheit geradlinig zum Downstream ausgerichtet sein kann. Keines der beiden Produkte muss bei der Förderung zum Downstream einen Radius durchlaufen.

Erfindungsgemäß ist ein Verfahren zur Extrusion von Kautschuk mit einer erfindungsgemäßen Extrusionslinie vorgesehen, wobei einer Extruderkonfiguration ein Edukt zugeführt wird, wobei das Edukt extrudiert wird und nach dem Extrudieren gekühlt wird, wobei eine Abzugsrolle mit einer Fördereinheit oder die Extruderkonfiguration zu einem Downstream verfahren wird.

Es wird durch das erfindungsgemäße Verfahren unter Verwendung einer erfindungsgemäßen Extrusionslinie vorteilhafterweise erreicht, dass bei einer abwechselnden Nutzung von mehreren Extruderkonfigurationen in einfacher Art genau ein Downstream verwendet werden kann. Durch den Entfall von weiteren Downstreams kann der Kosten- und Platzbedarf für Downstreams verringert werden.

Es ist eine Verwendung einer erfindungsgemäßen Abzugsrolle mit Fördereinheit oder einer Extruderkonfiguration zum Extrudieren von Kautschuk vorgesehen, insbesondere zur Durchführung eines erfindungsgemäßen Verfahrens.

Durch die Verwendung einer erfindungsgemäßen Abzugsrolle mit Fördereinheit oder einer Extruderkonfiguration wird ein verringerter Kosten- und Platzbedarf bei der Herstellung von unterschiedlichen Produkten erreicht.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 eine Extrusionslinie zur Extrusion von Kautschuk;
Fig. 2 vertikal zueinander angeordnete Extruderkonfigurationen;
Fig. 3 horizontal zueinander angeordnete Extruderkonfigurationen.

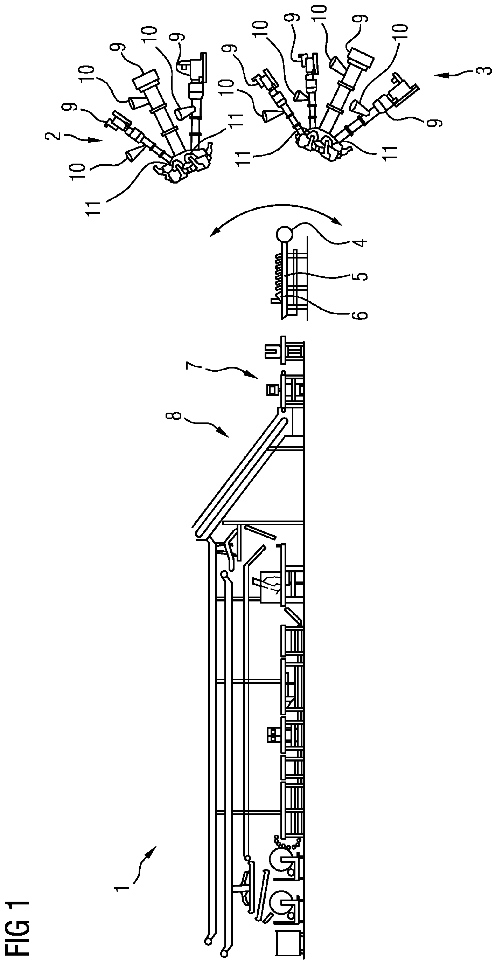

Figur 1 zeigt eine Extrusionslinie 1 zur Extrusion von Kautschuk. Einer Extruderkonfiguration 2 sowie einer zweiten Extruderkonfigurationen 3 der Extrusionslinie 1 werden über einen nicht dargestellten Upstream die Edukte, insbesondere Kautschuk, zugeführt. Die Extruderkonfigurationen 2 ist vertikal zur zweiten Extruderkonfiguration 3 angeordnet, die Extruderkonfigurationen 2 ist oberhalb der zweiten Extruderkonfiguration 3 angeordnet. Die Extrudate beider Extruderkonfigurationen 2, 3 werden auf eine Abzugsrolle 4 extrudiert, wobei die Abzugsrolle 4 zusammen mit einer Fördereinheit 5, aufweisend ein Fördermittel 6, verschwenkbar gelagert ist. Die Extrudate werden mit der Fördereinheit 5 von der Abzugsrolle 4 zum Downstream 7 gefördert, wobei die Extrudate im Downstream 7 farblich markiert, geschrumpft und vermessen werden. Folgend werden die Extrudate in einem Kühler 8 mit Wasser herabgekühlt.

Die Extruderkonfiguration 2 weist drei Extruder 9 unterschiedlicher Bauformen zur Herstellung von dreikomponentigen Extrudaten auf. Jeder der Extruder 9 weist einen Trichter 10 zur Aufnahme von Edukten sowie eine nicht dargestellte Förderschnecke zum Plastifizieren und Fördern der Edukte auf. Die so verarbeiteten Edukte werden aus dem Extruderkopf 11 extrudiert und mittels Schablonen in die gewünschte Geometrie gebracht, bevor sie auf die Abzugsrolle 4 gelangen. Die zweite Extruderkonfiguration 3 entspricht im Wesentlichen der Extruderkonfiguration 2, weist jedoch vier Extruder 9 auf.

Die Abzugsrolle 4 sowie das die Abzugsrolle 4 aufnehmende Ende der Fördereinheit 5 können in der Höhe verfahren werden, um vor der Extruderkonfiguration 2 oder alternativ vor der zweiten Extruderkonfiguration 3 positioniert zu werden, wie es durch den dargestellten Pfeil angedeutet ist. Die Fördereinheit 5 ist nicht horizontal oder in einer Ebene mit dem Downstream 7 ausgerichtet, die Ausrichtung hat stets eine vertikale Komponente, wenn sie vor der Extruderkonfiguration 2 oder der zweiten Extruderkonfigurationen 3 positioniert ist. Das der Abzugsrolle 4 abgewandte Ende der Fördereinheit 5, die als eine Schrumpfrollenbahn ausgeführt ist, verbleibt hierbei stets am Downstream 7.

Eine alternative Ausführungsform der Fördereinheit 5 weist zwei Fördermittel 6 auf, wobei ein Fördermittel 6 an der Extruderkonfigurationen 2 positioniert ist und ein weiteres Fördermittel an der zweiten Extruderkonfigurationen 3 positioniert ist. Eine Verfahrbarkeit der Fördermittel 6 ist nicht vorgesehen. Beide Fördermittel 6 enden an dem Downstream 7 und fördern abwechselnd Extrudate zum Downstream. Zum Fördern eines Extrudates von der zweiten Extruderkonfigurationen 3 zum Downstream 7 kann dem Fördermittel 6 ein Teilbereich, wie eine Rolle, entnommen werden, so dass das Extrudat dem Downstream zugeführt werden kann.

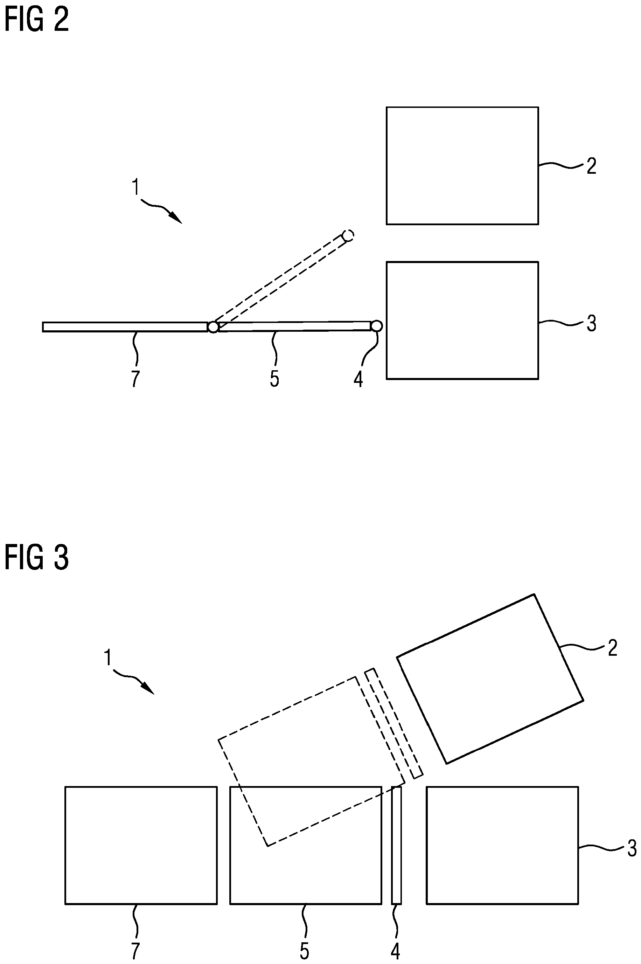

In Figur 2 sind weitere, vertikal zueinander angeordnete Extruderkonfigurationen 2, 3 einer Extrusionslinie 1 dargestellt. Die in Figur 2 vereinfacht dargestellte Extrusionslinie 1 kann aus denselben Einheiten, wie sie in Figur 1 beschrieben sind, aufgebaut sein. Sie weist eine Extruderkonfiguration 2 sowie eine unter der Extruderkonfiguration 2 angeordnete zweite Extruderkonfiguration 3 auf sowie eine Fördereinheit 5 mit einer Abzugsrolle 4 und einem Downstream 7. Die Ausführungsform der Figur 2 unterscheidet sich jedoch von der Ausführungsform der Figur 1 dadurch, dass sich die Fördereinheit 5 in einer Ebene mit dem Downstream 7 befindet, wenn sie vor der zweiten Extruderkonfiguration 3 positioniert ist. Die Extrudate der zweiten Extruderkonfiguration 3 durchlaufen somit keinen Radius bevor sie den Downstream 7 erreichen.

In Figur 3 sind weitere, horizontal zueinander angeordnete Extruderkonfigurationen 2, 3 einer Extrusionslinie 1 in einer Ansicht von oben dargestellt. Die in Figur 3 vereinfacht dargestellte Extrusionslinie 1 kann aus denselben Einheiten, wie sie in Figur 1 und in Figur 2 beschrieben sind, aufgebaut sein.

Sie weist eine Extruderkonfiguration 2 sowie eine neben der Extruderkonfiguration 2 angeordnete zweite Extruderkonfiguration 3 auf sowie eine Fördereinheit 5 mit einer Abzugsrolle 4 und einem Downstream 7. Die Ausführungsform der Figur 3 unterscheidet sich jedoch von der Ausführungsform der Figur 1 und der Figur 2 dadurch, dass die Extruderkonfiguration 2 und die zweite Extruderkonfiguration 3 nebeneinander auf einer horizontalen Ebene angeordnet sind, wobei die Extrudate der zweiten Extruderkonfiguration 3 ohne einen Radius zu durchlaufen zum Downstream 7 gefördert werden. Der Downstream 7 ist geradlinig zur zweiten Extruderkonfiguration 3 ausgerichtet. Die Extrudate der Extruderkonfiguration 2 werden über einen Radius zum Downstream 7 gefördert.

Um den Winkel, den die Extrudate der Extruderkonfiguration 2 zum Downstream 7 durchlaufen müssen, zu verringern, kann die zweite Extruderkonfiguration 3 ebenfalls um einen kleinen Winkel versetzt angeordnet werden, sodass die Extruderkonfiguration 2 geradliniger zum Downstream 7 angeordnet werden kann.

### Bezugszeichenliste

- 1: Extrusionslinie
- 2: Extruderkonfiguration
- 3: zweite Extruderkonfiguration
- 4: Abzugsrolle
- 5: Fördereinheit

- 6: Fördermittel
- 7: Downstream
- 8: Kühler
- 9: Extruder
- 10: Trichter

- 11: Extruderkopf

## Patentansprüche

1. Extrusionslinie (1) zur Extrusion von Kautschuk aufweisend einen Upstream zum Zuführen eines Edukts zu einer Extruderkonfiguration (2) der Extrusionslinie (1), wobei die Extruderkonfiguration (2) zumindest einen Extruder (9) aufweist, und einen Downstream (7), wobei zwischen dem Downstream (7) und der Extruderkonfiguration (2) eine Abzugsrolle (4) und ein Fördereinheit (5) angeordnet ist, **dadurch gekennzeichnet, dass**
die Fördereinheit (5) derart eingerichtet ist, dass von der ersten Extruderkonfiguration (2) oder einer zweiten Extruderkonfiguration (3) der Extrusionslinie (1) ein Produkt zum Downstream (7) zuführbar ist.

2. Extrusionslinie (1) nach Anspruch 1, **dadurch gekennzeichnet, dass** die Abzugsrolle (4) mit zumindest einem Teilbereich der Fördereinheit (5) oder die Extruderkonfiguration (2) verfahrbar zum Downstream (7) gelagert ist, wobei eine zweite Extruderkonfiguration (3) der Extrusionslinie (1) mit einem zweiten Upstream zur Extrusion auf die Abzugsrolle (4) vorgesehen ist.

3. Extrusionslinie (1) nach Anspruch 1 oder 2, **dadurch gekennzeichnet, dass** die Fördereinheit (5) eine Schrumpfrollenbahn ist.

4. Extrusionslinie (1) nach Anspruch 1 oder 2, **dadurch gekennzeichnet, dass** die Fördereinheit (5) aus passiven Elementen besteht.

5. Extrusionslinie (1) nach einem der vorangehenden Ansprüche, **dadurch gekennzeichnet, dass** die Fördereinheit (5) ein Fördermittel (6) und ein zweites Fördermittel aufweist, wobei das Fördermittel (6) dazu eingerichtet ist das Produkt mit der Abzugsrolle (4) von der Extruderkonfiguration (2) und das zweite Fördermittel dazu eingerichtet ist das Produkt mit einer zweiten Abzugsrolle von der zweiten Extruderkonfiguration (3) dem Downstream zuzuführen.

6. Extrusionslinie (1) nach einem der vorangehenden Ansprüche, **dadurch gekennzeichnet, dass** die Extruderkonfiguration (2) und die zweite Extruderkonfiguration (3) jeweils zumindest einen Extruder (9), bevorzugt jedoch mehrere zueinander ausgerichtete Extruder (9), aufweist.

7. Extrusionslinie (1) nach einem der vorangehenden Ansprüche, **dadurch gekennzeichnet, dass** die Extruderkonfiguration (2) und die zweite Extruderkonfiguration (3) unterschiedlich ausgeführt sind, insbesondere hinsichtlich der Anzahl der Extruder (9), der Größe der Extruder (9) und/oder des Extruderkopfdesigns.

8. Extrusionslinie (1) nach einem der vorangehenden Ansprüche, **dadurch gekennzeichnet, dass** die Extruderkonfiguration (2) oder die zweite Extruderkonfiguration (3) nicht verfahrbar gelagert ist und geradlinig zum Downstream (7) ausgerichtet ist, wobei die Abzugsrolle (4) mit der Fördereinheit (5) verfahrbar zum Downstream (7) gelagert ist.

9. Extrusionslinie (1) nach einem der vorangehenden Ansprüche, **dadurch gekennzeichnet, dass** die Extruderkonfiguration (2) zu der zweiten Extruderkonfiguration (2) in einer horizontalen Ebene oder in einer vertikalen Ebene ausgerichtet ist.

10. Extrusionslinie (1) nach einem der vorangehenden Ansprüche, **dadurch gekennzeichnet, dass** die Extruderkonfiguration (2) und die zweite Extruderkonfiguration (3) verfahrbar zum Downstream (7) gelagert sind.

11. Verfahren zur Extrusion von Kautschuk mit einer Extrusionslinie (1) nach einem der vorangehenden Ansprüche, wobei einer Extruderkonfiguration (2) ein Edukt zugeführt wird, wobei das Edukt extrudiert wird und nach dem Extrudieren gekühlt wird, **dadurch gekennzeichnet, dass**
eine Abzugsrolle (4) mit einer Fördereinheit (5) oder die Extruderkonfiguration (2) zu einem Downstream (7) verfahren wird.

12. Verwendung einer Abzugsrolle (4) mit Fördereinheit (5) oder einer Extruderkonfiguration (2) nach einem der Ansprüche 1 bis 10 zum Extrudieren von Kautschuk, insbesondere zur Durchführung eines Verfahrens nach Anspruch 11.
